Europäisches Patentamt

(19) **European Patent Office**

Office européen des brevets

(11) Numéro de publication: **0 010 465**

**B1**

(12) **FASCICULE DE BREVET EUROPEEN**

(45) Date de publication du fascicule de brevet: **04.11.81**

(21) Numéro de dépôt: **79400678.3**

(22) Date de dépôt: **25.09.79**

(51) Int. Cl.³: **F 16 K 31/383,** **A 62 C 37/06**

(54) Vanne à ouverture automatique, notamment pour des installations de protection contre l'incendie.

(30) Priorité: **27.09.78 FR 7827644**

(43) Date de publication de la demande: **30.04.80 Bulletin 80/9**

(45) Mention de la délivrance du brevet: **04.11.81 Bulletin 81/44**

(84) Etats Contractants Désignés: **BE DE GB IT NL SE**

(56) Documents cités:
DE - A - 2 623 587
EP - A - 0 004 595
FR - A - 920 264
FR - A - 1 443 257
FR - A - 2 228 502
GB - A - 805 452
US - A - 2 354 631
US - A - 2 730 179
US - A - 3 860 073

(73) Titulaire: **CERBERUS GUINARD Société dite:**
**81, rue Corot**
**F-92410 Ville d'Avray (FR)**

(72) Inventeur: **Lafon, Jacques**
*24, rue Yvan Tourgueneff*
**F-78320 Bougival (FR)**

(74) Mandataire: **Flechner, Willy**
*c/o CABINET FLECHNER 63, Avenue des Champs*
*Elysées*
**F-75008 Paris (FR)**

Courier Press, Leamington Spa, England.

Vanne à ouverture automatique, notamment pour des installations de protection contre l'incendie

La présente invention concerne une vanne à ouverture automatique et, plus particulièrement, une vanne du type à clapet dite à sécurité positive.

De telles vannes sont par exemple utilisées dans des installations de protection contre l'incendie dans lesquelles le fluide extincteur, par exemple du gaz halon ou du gaz carbonique liquéfié, est contenu dans des récipients sous une pression largement supérieure à la pression atmosphérique ambiante. L'orifice d'entrée-sortie de ces récipients est muni d'une vanne dont le dispositif de fermeture-ouverture, normalement fermé, ne s'ouvre que lorsqu'un incendie est détecté, libérant ainsi le fluide extincteur. Le dispositif ne se ferme que lorsque le récipient est vide et c'est cet aspect qui lui vaut le nom de vanne à sécurité positive.

Dans de telles vannes, le dispositif de fermeture-ouverture doit être capable d'obturer de manière étanche l'orifice du récipient contenant le fluide extincteur à haute pression et de s'ouvrir rapidement, sans intervention humaine, dès la détection d'un incendie et ceci, en consommant un minimum d'énergie pour assurer la fermeture étanche et pour déclencher l'ouverture. En outre, de telles vannes doivent être prévues pour permettre un remplissage aisé du récipient, soit après un fonctionnement de l'installation d'extinction, soit en cas de contrôle du niveau de remplissage du recipient. Enfin, il est impératif que le dispositif de fermeture-ouverture soit à sécurité positive.

Les vannes de l'art antérieur ne réunissent pas en général toutes les qualités ci-dessus mentionnées et sont de plus d'une construction compliquée et d'un fonctionnement délicat. Au GB—A—805 452 (PARKER-HANNIFIN), on décrit une vanne, destinée, notamment, à des installations de protection contre l'incendie, du type indiqué au préambule de la revendication principale. On ne précise pas comment on peut remplir le récipient. Lorsque la vanne fonctionne, rien n'empêche le fluide, non seulement d'emprunter la sortie, mais aussi d'aller, par l'intermédiaire du trou, dans l'alésage le plus large, et de là de se perdre dans le dispositif de sécurité ouvert ou de s'y accumuler et de provoquer la fermeture intempestive, au moins partielle, de la vanne. On remédie à cela au DE—A—2 623 587 (ALBERT) par une vanne d'un type différent, où le ressort n'applique pas de force au clapet, en faisant en sorte qu'en position de fonctionnement le trou soit obturé. Pour remplir le récipient formant réservoir de fluide, il faut recourir à un système manuel compliqué de rotation d'un volant, pour ramener le clapet. Le système est coûteux à installer et difficile à manoeuvrer.

L'invention pallie ces inconvénients par une vanne dans laquelle le fluide ne peut pas prendre le chemin inutile de l'alésage le plus large et dans laquelle le remplissage s'effectue automatiquement.

La vanne, suivant l'invention, est telle que définie à la revendication principale.

En utilisant une telle vanne lors du remplissage, la pression du réservoir de remplissage raccordé à l'ouverture de sortie, suffit à faire remonter le clapet mais sans cependant l'amener jusqu'au point où l'obturateur viendrait se plaquer sur le trou, puisque, grâce à celui-ci, il arrive aussi du fluide dans l'alésage le plus large.

Le remplissage terminé, les pressions s'égalisent de part et d'autre du clapet et c'est alors la force du ressort qui prédomine et qui ramène automatiquement le clapet en position de fermeture. Lors du fonctionnement l'obturateur est appliqué sur le trou, pendant que l'alésage le plus large reste en communication avec le dispositif de dépression.

De préférence:

— la seconde butée est constituée par l'embouchure d'une sortie de l'alésage et une rainure diamétrale ménagée sur le sommet de l'obturateur maintient la communication entre l'alésage et la sortie quand l'obturateur est appliqué sur la seconde butée.

— l'une des butées est constituée par la face inférieure d'un bouchon supérieur de l'alésage.

— les deux butées sont constituées par des faces du bouchon.

— le clapet présente un chanfrein extérieur, au niveau de l'ouverture de sortie, lorsque le clapet est engagé dans l'alésage.

La présente invention sera mieux comprise à l'aide de la description suivante d'une forme de réalisation particulière donnée à titre d'exemple et représentée au dessin ci-annexé dans lequel:

La figure 1 est une vue en coupe axiale d'une vanne selon la présente invention, la vanne étant connectée à un dispositif de détection d'incendie du type bouchon à point de fusion déterminé ou ampoule dite "sprinkler".

La figure 2 est une vue en coupe, analogue à celle de la figure 1, d'une vanne selon l'invention connectée à un dispositif de détection d'incendie munie d'un perforateur; et

La figure 3 est une vue en coupe, analogue à celle des figures 1 et 2, d'une vanne selon l'invention connectée à une électrovanne.

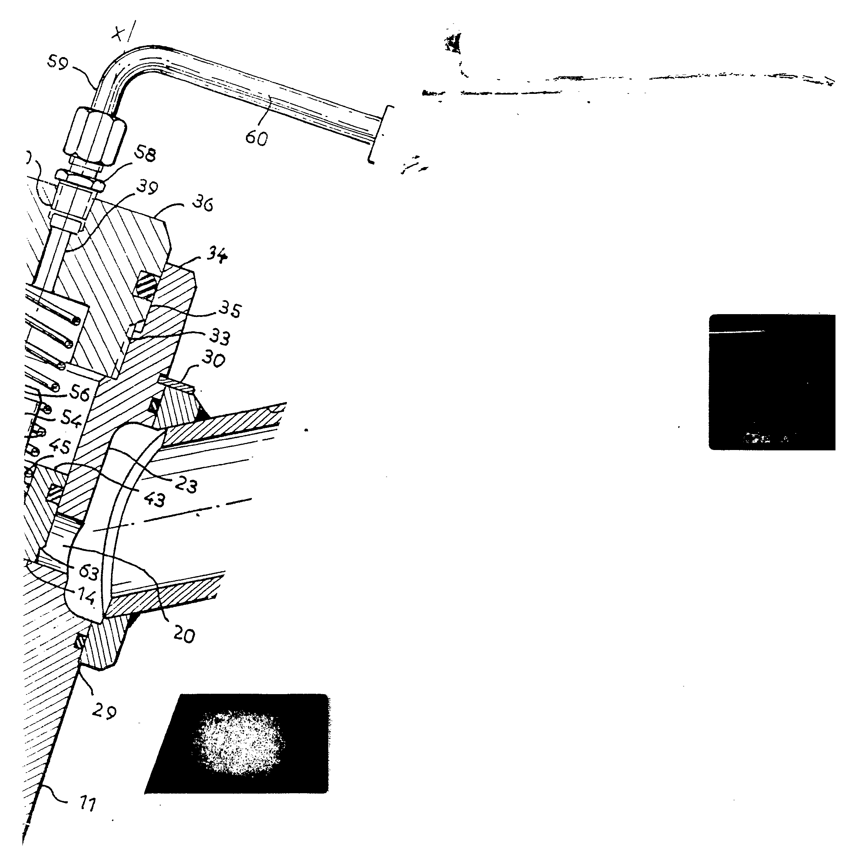

Sur les figures 1 à 3, les éléments identiques sont désignés par les mêmes références. La vanne selon la présente invention comprend un corps de vanne 11, d'axe XX' réalisé par fonderie et usinage d'un matériau métallique. Ce corps de vanne 11 comporte deux alésages d'axe XX' 12 et 13. L'alésage 12 a un diamètre supérieur à celui de l'alésage 13. Un épaulement chanfreiné 14 constitue la séparation entre les deux alésages 12 et 13.

L'alésage 13 constitue l'orifice d'entrée de la vanne et communique avec un récipient, représenté schématiquement et partiellement dans la figure 1 qui contient un fluide sous pression, c'est-à-dire un fluide sous une pression supérieure à la pression atmosphérique.. Ce fluide est, dans le cas d'une installation de protection contre l'incendie, du gaz halon ou du gaz carbonique liquéfié. L'assemblage entre le corps de vanne 11 et le récipient doit être étanche et peut être fait de toutes manières connues, par exemple par un alésage fileté 15 qui reçoit l'embout fileté 16 du récipient et un joint torique 17 logé dans une gorge d'un épaulement 18 sur lequel vient s'appuyer l'extrémité 19 de l'embout fileté 16.

Le corps de vanne 11 est percé de trous radiaux, au nombre de six par exemple, tels que ceux référencés 20 et 21, au niveau de l'épaulement 14. Ces trous radiaux débouchent à l'extérieur du corps de vanne 11 dans un espace annulaire 22 constitué par un évidement annulaire 23 du corps de vanne et un cylindre creux 24 qui est emmanché autour du corps de vanne. L'étanchéïté est obtenue par deux joints toriques 25 et 26 disposés respectivement dans des gorges 27 et 28 du corps de vanne. Le cylindre creux 24 est libre en rotation mais est maintenu en translation par un épaulement 29 et un segment d'arrêt 30. Le cylindre creux 24 comporte une ouverture latérale dans laquelle vient s'emmancher un embout 31 qui constitue l'orifice de sortie de la vanne. Cet embout 31 est assemblé obliquement ou perpendiculairement au cylindre 24, par exemple par soudage.

Du côté opposé à l'embout 16 du récipient, le corps de vanne comporte un épaulement intérieur 32 formé par l'alésage 12 et un filetage intérieur 33. Le filetage intérieur 33 se prolonge jusqu'à l'extrémité 34 du corps de vanne par un alésage 35. Cette extrémité 34 est prévue pour recevoir un bouchon 36 ayant un embout fileté prévu pour se visser dans le filetage 33 et venir se bloquer sur l'épaulement 32. L'étanchéïté du bouchon 36 avec le corps de vanne est obtenue par un joint torique 37 logé dans une gorge 38 dudit bouchon. Le bouchon 36 est percé d'un trou lisse 39 prolongé vers la face extérieure dudit bouchon par un trou taraudé 40 et vers l'autre extrémité par un alésage interne 41. Le trou taraudé 40 reçoit un embout cylindrique fileté 58 associé de manière étanche à l'extrémité 59 d'un tuyau ou conduit 60 connecté à un dispositif de détection d'incendie 61 du type par exemple à bouchon à point de fusion déterminé ou ampoule "sprinkler". Dans ce type de détecteur d'incendie, le conduit 60 est rempli d'un fluide sous pression et la fusion du bouchon provoque une baisse de pression qui se répercute à l'intérieur de l'espace situé sous le bouchon 36.

Les alésages 12 et 13 du corps de vanne sont prévus pour recevoir un clapet coulissant 42 réalisé en un matériau rigide, par exemple du bronze. Ce clapet 42 comporte deux parties circulaires d'axe XX' 43 et 44, la partie 43 ayant un diamètre supérieur à celui de la partie 44, ce qui donne lieu à la formation d'un épaulement 43'. La partie circulaire 43 comporte un alésage interne 45 et une gorge 46, dans laquelle vient se loger un joint torique d'étanchéïté 47. La partie circulaire 44 comporte, du côté de l'alésage 13, un trou calibré 48 prolongé par un trou lisse 49 et un taraudage qui débouche dans l'alésage interne 45 du clapet. La paroi externe de la partie 44 comporte une gorge 51 dans laquelle vient se loger un joint torique d'étanchéïté 52. Au niveau des trous 20, 21, la paroi de la partie externe présente un chanfrein 63.

L'alésage 41 du bouchon 36 et l'alésage 45 du clapet ont le même diamètre et sont prévus pour recevoir les extrémités d'un ressort 53 travaillant en compression. Ce ressort 53 maintient le clapet 42 éloigné du bouchon 36 en appliquant l'épaulement 43' contre l'épaulement 14.

Un obturateur mobile 54 de forme cylindrique, réalisé par exemple en matériau plastique, est disposé à l'intérieur du ressort 53 dans lequel il peut coulisser. L'extrémité 55 de l'obturateur du côté du clapet 42, est plate et ferme l'ouverture du taraudage 50 tandis que son autre extrémité comporte une rainure diamétrale 56.

On remarquera que l'espace intérieur du corps de vanne compris entre le bouchon 36 et le clapet 42 constitue une chambre de pression 62 dont le rôle sera défini ci-après. Cette chambre de pression est remplie d'un fluide qui est un mélange d'air et de gaz correspondant à celui du récipient.

Dans la partie correspondant à l'alésage 13, la paroi du corps de vanne est percée d'un trou taraudé 57 qui permet le montage d'un manomètre, d'un manocontact et tout autre dispositif de sécurité contre une surpression du fluide contenu dans le récipient.

Le fonctionnement de la vanne de la figure 1 est alors le suivant. En position de repos, le dispositif de détection d'incendie 61 ne fonctionne pas et la pression à l'intérieur du tuyau 60 et donc de la chambre de pression 62 est celle du récipient contenant le fluide extincteur par suite de l'existence du trou calibré 48 dans le clapet 42. Comme la section de la partie 43 du clapet est supérieure à la section de la partie 44 du clapet, la résultante des forces qui s'exercent sur le clapet le maintient en appui sur l'épaulement 14 et, dans cette position, les trous radiaux tels que 20 et 21 sont obturés par les parois latérales du clapet de sorte qu'aucune communication n'existe entre le récipient contenant le fluide extincteur et l'orifice de sortie 31 de la vanne.

En cas de fonctionnement du dispositif de détection d'incendie 61, la pression à l'intérieur du tuyau 60 diminue brusquement et il en est de même à l'intérieur de la chambre de pression 62. La résultante des forces s'exerçant sur la partie 43 du clapet diminue et devient inférieure à celle s'exerçant sur la partie 44: le clapet se déplace en s'éloignant de l'épaulement 14 et dégage les trous radiaux 21 de sorte que le fluide extincteur du récipient s'échappe vers l'orifice de sortie par les trous radiaux 20, 21, l'espace annulaire 22 et l'embout de sortie 31.

Dans son déplacement, le clapet 42 comprime le ressort 53 jusqu'à ce que l'obturateur 54 vienne en butée sur le fond de l'alésage interne 41 du bouchon 36. Dans cette position de butée, la face plate 55 de l'obturateur empêche l'entrée du fluide extincteur dans la chambre de pression 62 tandis que la gorge diamétrale 56 maintient une faible pression à l'intérieur de ladite chambre, en général une pression égale à la pression atmosphérique. Le clapet reste donc en position d'ouverture et y restera tant que le fluide s'écoulera du récipient. C'est ce mode de fonctionnement qui classe la vanne de la présente invention dans les vannes dites à sécurité positive.

Lorsque le récipient est vide, les pressions s'égalisent de part et d'autre du clapet de sorte que le clapet revient alors en position de fermeture (sous l'action du ressort 53).

Le remplissage du récipient se fait par l'intermédiaire de l'embout de sortie 31 que l'on connecte à un réservoir de fluide extincteur à haute pression. Sous l'effet de la pression sur la surface chanfreinée 63 du clapet, ce dernier se déplace en comprimant le ressort 53 ainsi que l'air emmagasiné dans la chambre de pression 62 car le dispositif de détection 61 est de nouveau en position de détection de sorte que le tuyau 60 est fermé. Cette pression d'air maintient l'obturateur 54 en appui sur le clapet 42 et ferme ainsi le moyen de communication entre la chambre de pression et l'orifice d'entrée de la vanne. Le clapet prend alors une position d'équilibre au-dessus de sa face d'appui par suite de l'équilibre des forces qui s'exercent de part et d'autre: d'un côté, le ressort 63 et l'air comprimé dans la chambre de pression et, de l'autre côté, la pression du fluide qui pénètre dans le récipient par lesdits trous radiaux.

Lorsqu'on cesse le remplissage, le clapet 42 revient en contact sur sa surface d'appui sous l'effet du ressort et de l'air comprimé, puis les pressions dans la chambre de pression et à l'intérieur du récipient s'équilibrent par l'intermédiaire du trou calibré 48 de nouveau ouvert du fait que l'obturateur 54 n'est plus maintenu sur le clapet par la pression de l'air. La différence des sections des parties 43 et 44 fait que le clapet est fortement appliqué sur sa face d'appui et obture de ce fait les six trous radiaux.

On remarquera que le remplissage du récipient peut se faire à tous moments que le récipient soit vide, comme on l'a décrit ci-dessus, ou qu'il soit en partie plein.

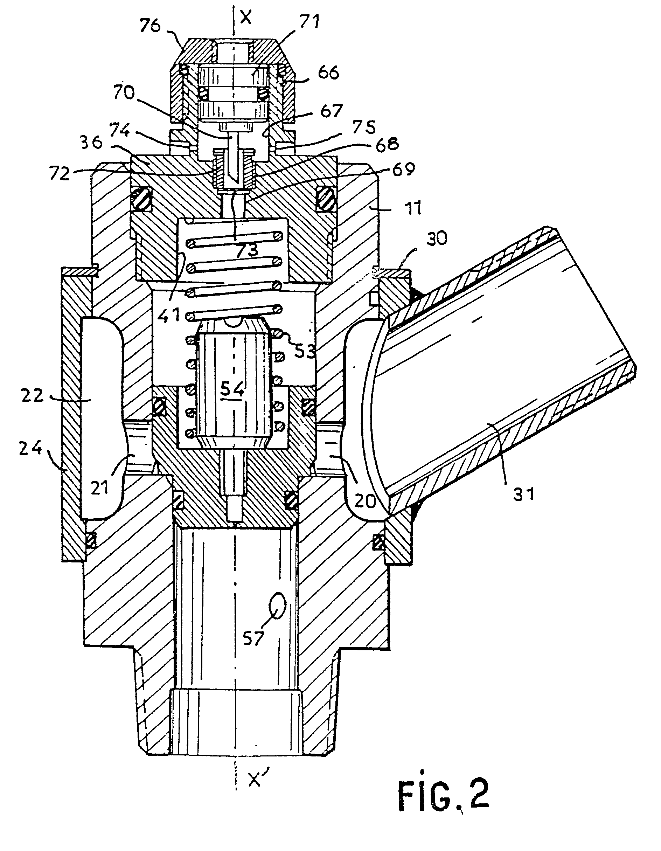

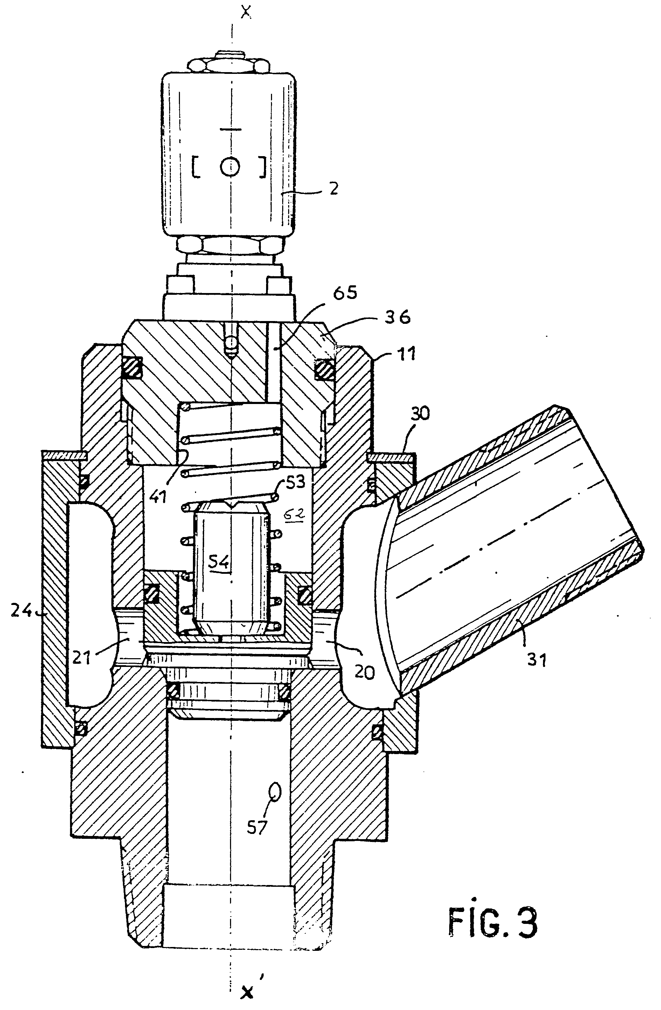

En relation avec la figure 1, on a décrit une vanne selon l'invention dont la chambre de pression 62 est connectée à un dispositif de détection d'incendie 61 du type bouchon à point de fusion déterminé par l'intermédiaire d'un tuyau 60. Il est clair que le vanne selon l'invention s'adapte à d'autres dispositifs de détection d'incendie, par exemple du type à électrovanne (figure 3) ou du type pyrotechnique avec perforateur (figure 2). La vanne est alors prévue avec un dispositif d'adaptation qui a pour but de provoquer une diminution de pression à l'intérieur de la chambre de pression 62.

Ainsi sur la figure 3, l'électro-vanne 2 est montée sur le bouchon 36 de la chambre de pression 62 et communique avec ladite chambre par un conduit 65. Le déclenchement de l'électro-vanne provoque une dépression en son intérieur qui se répercute à l'intérieur de la chambre 62.

Sur la figure 2, le dispositif qui est représenté est plus complexe et comprend, sur le bouchon 36, un embout fileté 66 sur lequel vient se visser de manière étanche un capuchon 76, cet embout est muni d'un alésage interne 67 prolongé par un trou taraudé 68 at un trou lisse 69 qui débouche à l'intérieur de l'alésage interne 41 du bouchon 36. Un piston perforateur 71 est monté de façon coulissante à l'intérieur de l'alésage 67 et son extrémité débouche dans le trou taraudé 68. Le piston perforateur 71 comporte à l'une de ses extrémités une broche perforante 70 qui coulisse dans une vis de guidage 72. Cette vis de guidage 72 maintient par blocage sur une rondelle d'étanchéité une membrane 73. La base de l'embout 66 comporte des trous radiaux 74 et 75 qui font communiquer l'intérieur de l'embout avec l'extérieur. Ainsi, lorsque le piston perforateur 71 coulisse de haut en bas sur la figure 2, il perfore la membrane 73, ce qui permet au fluide de la chambre de pression 62 de s'échapper par les trous 74 et 75.

La vanne selon l'invention a été décrite dans son utilisation avec du gaz liquéfié mais elle peut également être utilisée avec un fluide quelconque.

La vanne à ouverture automatique selon l'invention a été décrite avec un moyen de communication entre le récipient et la chambre de pression constitué par un trou calibré percé dans le clapet mais il est clair que ce moyen de communication peut être réalisé de différentes manières à la portée de l'homme de l'art. Il est clair également que les moyens de modification de la pression à l'intérieur de la chambre 62 peuvent également être réalisés de différentes manières également à la portée de l'homme de l'art en fonction des installations dans lesquelles la vanne est utilisée.

**Revendications**

1. Vanne, formée d'un corps (11), dont l'épaulement (14), entre deux alésages (12, 13) cylindriques, d'axe vertical, se succédant vers le bas du plus large au plus étroit, forme siège pour un clapet (42), à trou (48) mettant les deux alésages (12, 13) en communication, coulissant, à l'encontre d'un ressort (53) et en dégageant dans l'alésage (12) le plus large une ouverture (20) de sortie, jusqu'à une première butée (32), caractérisée par un obturateur (54) appliqué, par gravité, sur le trou (48), et libre de parcourir l'alésage (12) jusqu'à une seconde butée sur une distance verticale qui est inférieure à celle séparant la première butée (32) du sommet (43) du clapet (42).

2. Vanne suivant la revendication 1, caractérisée en ce que la seconde butée est constituée par l'embouchure d'une sortie (59) de l'alésage (12) et une rainure (56) diamétrale ménagée sur le sommet de l'obturateur (54) maintient la communication entre l'alésage (12) et la sortie (59) quand l'obturateur (54) est appliqué sur la seconde butée.

3. Vanne suivant l'une des revendications 1 ou 2, caractérisée en ce que l'une des butées est constituée par la face inférieure d'un bouchon (36) supérieur de l'alésage (12).

4. Vanne suivant la revendication 3, caractérisée en ce que les deux butées sont constituées par des faces du bouchon (36).

5. Vanne suivant l'une des revendications 1 à 4, caractérisée en ce que let clapet (42) présente un chanfrein (63) extérieur, au niveau de l'ouverture (20) de sortie, lorsque le clapet (42) est engagé dans l'alésage (13).

## Patentansprüche

1. Absperrventil bestehend aus einem zwei konzentrische Bohrungen (12, 13) unterschieldichen Durchmessers aufweisenden Gehäuse (11) von denen die untere (13) einen geringeren Durchmesser aufweist als die obere (12) und die zwischen sich eine Anschlagschulter (14) bilden für einen in der oberen Bohrung entgegen der Kraft einer Feder (53) bis zu einem Anschlag (32) verschiebbar geführten Absperrkolben (42), der beim Verschieben gegen die Kraft der Feder eine Ausgangsöffnung (20) freigibt und der eine die beiden Bohrungen (12, 13) verbindende Durchlassöffnung (48) aufweist, gekennzeichnet durch ein frei in der oberen Bohrung bewegbares Verschlussstück (54), das mit seinem Gewicht auf der Durchlassöffnung (48) aufliegt und zusammen mit dem Absperrkolben (42) gegen einen zweiten Anschlag geführt wird un dabei den Weg des Absperrkolbens begrenzt, ehe dieser den ersten Anschlag (32) erreicht.

2. Absperrventil nach Anspruch 1, dadurch gekennzeichnet, dass der zweite Anschlag im Bereich einer Austrittsöffnung (59) der oberen Bohrung (12) vorgesehen ist und dass das Verschlusstück (54) an seiner Oberseite mit einer Quernut (56) versehen ist, welche eine Verbindung zwischen Innenraum der Bohrung (12) und Austrittsöffnung (59) auch bei gegen den Anschlag gedrücktem Verschlusstück (54) bildet.

3. Absperrventil nach einem der Ansprüche 1 oder 2, dadurch gekennzeichnet, dass einer der Anschläge von der Innenseite eines die obere Bohrung (12) abschliessenden Abschlusstückes (36) gebildet ist.

4. Absperrventil nach Anspruch 3, dadurch gekennzeichnet, dass beide Anschläge durch die Oberfläche des Abschlusstückes gebildet sind.

5. Absperrventil nach einem der Ansprüche 1 bis 4, dadurch gekennzeichnet, dass der Absperrkolben (42) eine Angriffsschulter (63) in dem Bereich aufweist, de bei in die Bohrung (13) eingeführtem Absperrkolben (42) im Bereich der Ausgangsöffnung (20) liegt.

## Claims

1. A valve having a body (11) with a shoulder (14) between two cylindrical bores (12, 13) having a vertical axis, the wider being above the narrower, said shoulder forming a seat for a closure member (42), which has a hole (48) providing communication between the two bores (12, 13) and slides in opposition to a spring (53) to a first abutment (32) to uncover an exit port (20) in the wider bore (12), characterized by an obturator (54) covering the hole (48) by the influence of gravity, and free to traverse the bore (12) to a second abutment through a vertical distance less than that between the first abutment (32) and the top (43) of the closure member (42).

2. A valve according to Claim 1 characterized in that the second abutment is provided by the mouth of an outlet (59) from the bore (12), and a radial groove (56) in the top of the obturator (54) provides communication between the bore (12) and the outlet (59) when the obturator is applied to the second abutment.

3. A valve according to either of Claims 1 and 2 characterized in that the first abutment is provided by the lower face of a plug (36) above the bore (12).

4. A valve according to Claim 3 characterized in that the two abutments are both provided by faces of the plug (36).

5. A valve according to any of Claims 1 to 4 characterized in that the closure member (42) has an external chamfer (63), which is at the level of exit port (20) when the closure member (42) is engaged in bore (13).

0010465

FIG. 2

X

2

65

36

11

30

31

41

S3

62

S4

24

21

20

57

**FIG. 3**

X'